Europäisches Patentamt

European Patent Office

Office européen des brevets

(11) Numéro de publication: **0 254 600**
**A1**

## (12) DEMANDE DE BREVET EUROPEEN

(21) Numéro de dépôt: **87400839.4**

(22) Date de dépôt: **14.04.87**

(51) Int. Cl.⁴: **A 01 F 15/00**
**A 01 B 59/042**

(30) Priorité: **25.04.86 FR 8606004**

(43) Date de publication de la demande:
**27.01.88 Bulletin 88/04**

(84) Etats contractants désignés: **DE GB**

(71) Demandeur: **RIVIERRE CASALIS**
**8, rue André Dessaux**
**F-45400 Fleury Les Aubrais (FR)**

(72) Inventeur: **Mouret, Patrick**
**328, rue de la Garenne**
**F-45660 Mardie (FR)**

**Galant, Jean-CLaude**
**71, Boulevard Kennedy**
**F-45800 Saint Jean de Braye (FR)**

(74) Mandataire: **Ernst-Schonberg, Michel**
**REGIE NATIONALE DES USINES RENAULT (S. 0267)**
**F-92109 Boulogne Billancourt Cédex (FR)**

Le titre de l'invention a été modifié (Directives relatives à l'examen pratiqué à l'OEB, A-III, 7.3)

(54) **Ensemble d'attelage de presse ramasseuse tractée.**

㉗ Ensemble constitué par une presse ramasseuse (10) de produits agricoles attelée à un tracteur (20) dans lequel la presse est essentiellement constituée par un châssis (1) qui se prolonge vers l'avant par un timon (2) d'attelage reposant sur le sol par l'intermédiaire de roues (3) sur lequel est monté rotatif à sa partie inférieure un dispositif (4) de ramassage et qui porte à sa partie supérieure des moyens (5) de formation d'une balle de fourrage tandis que la partie arrière du tracteur (20) porte deux bras (22) articulés de relevage d'outils agraires, caractérisé par le fait que l'extrémité du timon (2) porte l'axe (26) de pivotement d'une barre (23) d'attelage coudée qui présente une configuration en U renversé à branches (24, 24') orientées vers les bras (22) de relevage et accouplées à ces derniers et dont la partie (25) horizontale est montée à pivotement sur ledit timon (2).

FIG.1

EP 0 254 600 A1

**Description**

## ENSEMBLE CONSTITUE PAR UNE PRESSE RAMASSEUSE DE PRODUITS AGRICOLES ATTELEE A UN TRACTEUR.

L'invention concerne un ensemble constitué par une presse ramasseuse de produits agricoles attelée à un tracteur, ladite presse comprenant un châssis sur lequel est monté rotatif à sa partie inférieure un dispositif de ramassage et qui porte sur sa partie supérieure des moyens de formation d'une balle de fourrage et qui est monté sur une paire de roues en contact avec le sol.

On connaît par la publication FR-A-2 558 031 une telle presse dans laquelle le dispositif de ramassage repose sur le sol par l'intermédiaire de roues et qui peut pivoter librement par rapport au châssis autour d'un axe fixe.

Dans ce cas le fait de relever le dispositif de ramassage pour répondre aux inégalités du sol diminue l'entrée de la chambre de formation de la balle et réduit les performances de la presse.

Pour résoudre ce problème la publication FR-A-2 546 368 propose une presse dans laquelle le dispositif de ramassage est fixe par rapport à l'entrée de la chambre de formation de la balle et les roues de la presse sont montées sur le châssis par l'intermédiaire d'un moyen de réglage en hauteur du châssis et du dispositif de ramassage.

Les complications de la presse consécutives à la réalisation d'un système de suspension du châssis nécessitent la conception d'organes spécialement adaptés qui diminuent inconsidérément le rapport qualité/prix de l'engin.

L'invention à pour objet un ensemble constitué par une presse ramasseuse attelée à un tracteur dont l'agencement permet de protéger le dispositif de ramassage des chocs contre des obstacles ou de modifier la position de ce dispositif par rapport au sol dans le but d'améliorer les conditions de ramassage en fonction du produit à récolter.

L'invention a aussi pour objet un tel ensemble dont la réalisation permet d'assurer un réglage et une modification rapide de la position du dispositif par rapport au sol.

L'invention concerne plus particulièrement un ensemble constitué par une presse ramasseuse dont le châssis se prolonge vers l'avant par un timon par lequel la presse est attelée au tracteur qui porte à l'arrière des bras articulés de relevage d'outils agraires.

Selon l'invention l'extrémité du timon de la presse porte l'axe de pivotement d'une barre d'attelage coudée qui présente une configuration en U renversé à branches orientées vers les bras articulés de relevage et accouplées à ces derniers et dont la partie horizontale est montée à pivotement sur ledit timon.

L'ensemble ainsi réalisé utilise le dispositif de relevage et d'attelage du tracteur pour soulever ou abaisser la presse dans le but d'éviter d'endommager le dispositif de ramassage au cours du transport routier de la presse.

L'ensemble ainsi réalisé autorise le réglage du dispositif de ramassage par les commandes du dispositif de relevage disposées dans la cabine de conduite du tracteur.

D'autres avantages et caractéristiques de l'invention ressortiront de la description qui va suivre faite en référence aux dessins dans lesquels :

- La figure 1 est une représentation schématique vue en élévation d'une presse ramasseuse attelée à un tracteur en position de travail.

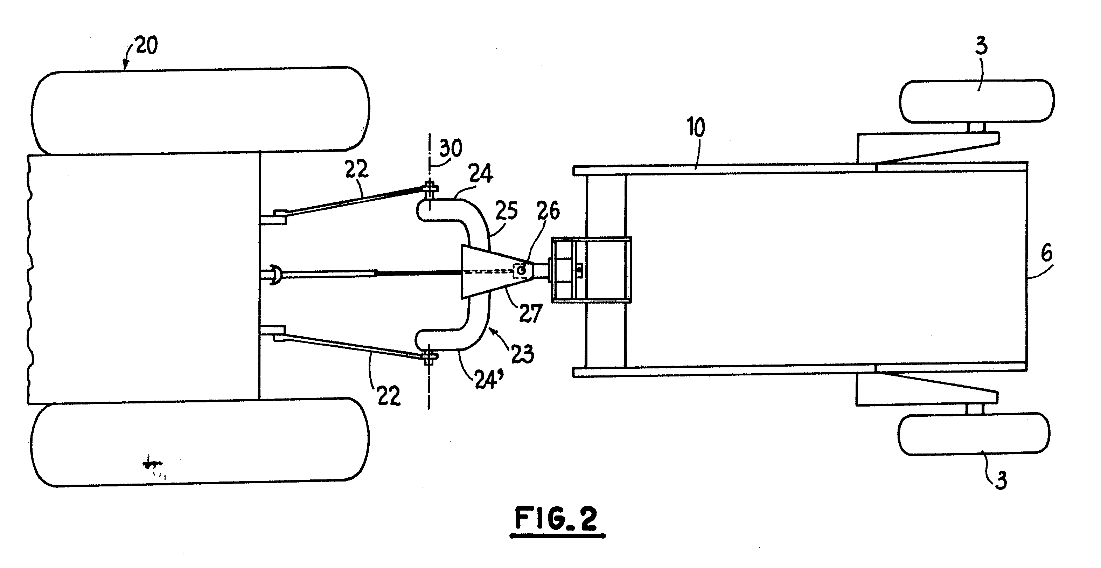

- La figure 2 est une vue de dessus de l'ensemble représenté à la figure 1.

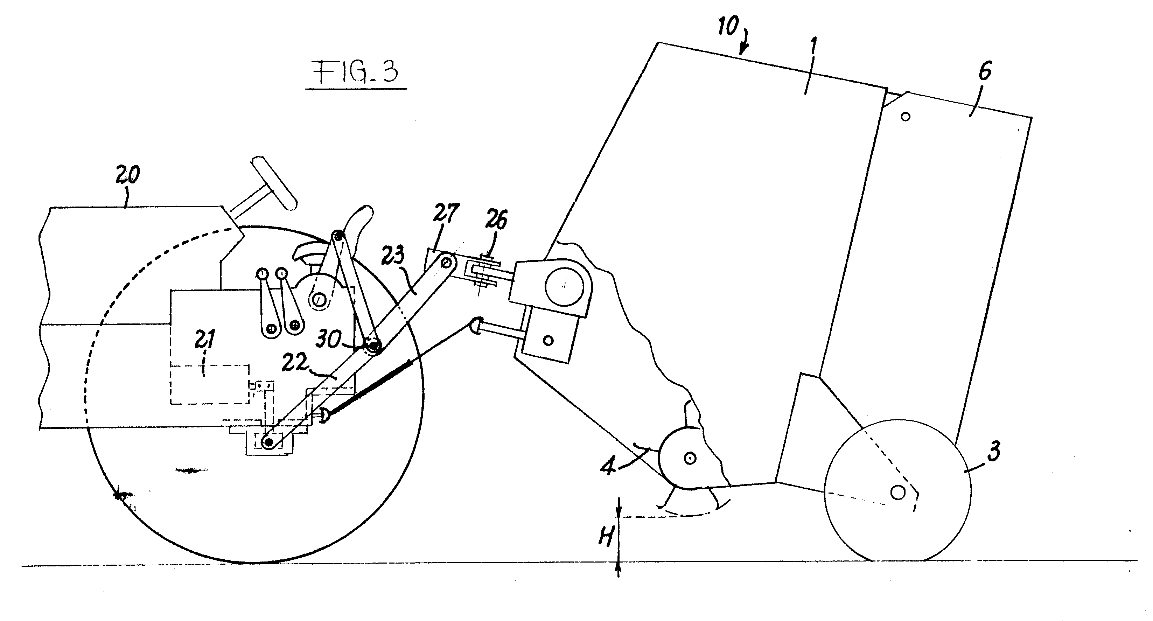

- La figure 3 est une représentation en élévation de l'ensemble presse-ramassause et tracteur en position relevée du dispositif de ramassage de la presse.

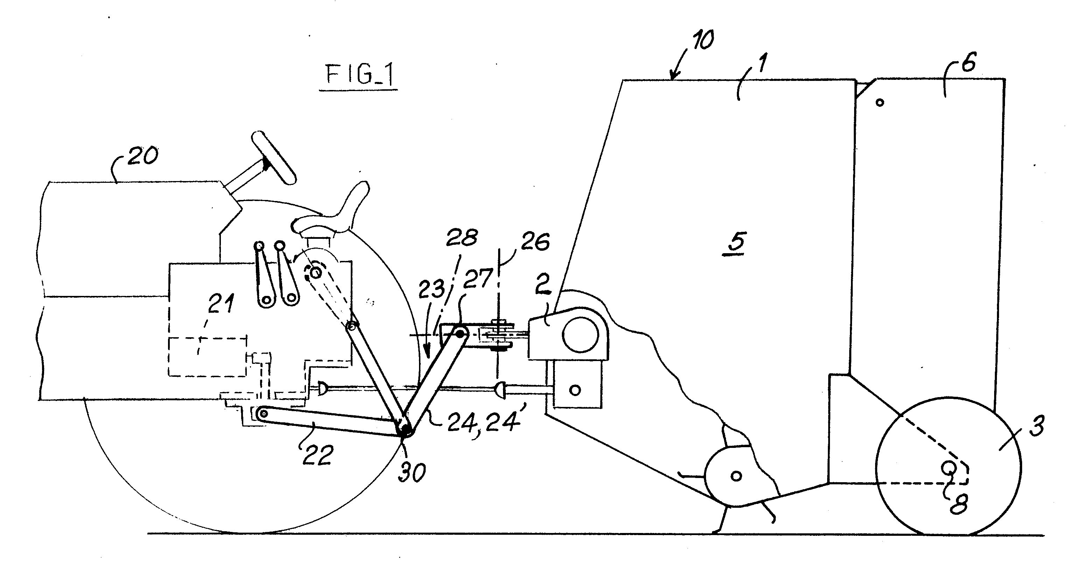

Ainsi que cela a été représenté à la figure 1, la presse-ramasseuse 10 est constituée par un châssis 1 qui se prolonge vers l'avant par un timon 2 d'attelage et qui repose sur le sol par l'intermédiaire de roues 3. La partie inférieure du châssis 1 porte un dispositif de ramassage 4 à dents qui ramasse et introduit le produit récolté dans la partie supérieure du châssis portant une chambre contenant des moyens 5 de formation de la balle de fourrage et un hayon relevable 6 permettant l'éjection de la balle terminée. A titre d'exemple les moyens de formation 5 peuvent être constitués à partir d'un système de courroies et/ou de rouleaux.

La presse 10 est entraînée par un tracteur 20 comportant un dispositif de relevage hydraulique 21 manoeuvré à partir du poste de conduite.

Le dispositif de relevage commande un attelage conventionnel constitué notamment par deux bras de relevage 22.

Selon l'invention les bras 22 de relevage sont accouplés de manière articulée autour d'un axe 30 aux branches 24, 24' d'une barre d'attelage 23 coudée qui possède une configuration générale en U renversé à branches 24, 24' orientées vers les bras de relevage 22, dont la partie médiane horizontale 25 porte un axe de pivotement 26 monté sur un support 27 fixé au timon 2 de manière tournante autour d'un axe 28 orthogonal à l'axe de pivotement 26.

L'axe de pivotement 26 permet de la sorte l'orientation de la presse 10 au cours de sa traction par le tracteur 20.

L'axe de rotation 28 évite les torsions horizontales du châssis de la presse lorsque ses roues reposent sur un devers par rapport au plan d'évolution du tracteur.

Pour régler la hauteur H par rapport au sol des dents du dispositif de ramassage 4, on actionne le dispositif 21 de relevage du tracteur. Les bras de relevage 22 soulèvent alors la barre d'attelage 23. L'axe d'articulation 30 des bras 22 sur la barre 23 autorise les changements d'orientation de la barre 23. La position reculée des roues 3 par rapport au timon 2 permet le soulèvement du timon autour de l'axe des roues 3 et la levée du dispositif de ramassage 4 au dessus du sol.

Sans sortir du cadre de l'invention il sera bien entendu possible de remplacer la presse à balles cylindriques telle que décrite par toute autre presse à fourrage et notamment par les presses à balles parallélipipédiques.

**Revendications**

1. Ensemble constitué par une presse ramasseuse (10) de produits agricoles attelée à un tracteur (20) dans lequel la presse est essentiellement constituée par un châssis (1) qui se prolonge vers l'avant par un timon (2) d'attelage reposant sur le sol par l'intermédiaire de roues (3) sur lequel est monté rotatif à sa partie inférieure un dispositif (4) de ramassage et qui porte à sa partie supérieure des moyens (5) de formation d'une balle de fourrage tandis que la partie arrière du tracteur (20) porte deux bras (22) articulés de relevage d'outils agraires, caractérisé par le fait que l'extrémité du timon (2) porte l'axe (26) de pivotement d'une barre (23) d'attelage coudée qui présente une configuration en U renversé à branches (24, 24') orientées vers les bras (22) de relevage et accouplées à ces derniers et dont la partie (25) horizontale est montée à pivotement sur ledit timon (2).

2. Ensemble selon la revendication 1, caractérisé par le fait que l'axe (26) de pivotement de la barre (23) d'attelage est monté de manière tournante autour d'un axe (28) orthogonal à l'axe de pivotement (26).

FIG_1

0254600

FIG. 2

0254600

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-3 442 831  (BUCHER)<br>* Page 12, paragraphe 3; figure 4 * | 1 | A 01 F   15/00<br>A 01 B   59/042 |
| Y,P | EP-A-0 196 426  (DEERE)<br>* Revendication 1; figures 1-3 * | 1,2 | |
| A | US-A-4 066 131  (ZANDBERGEN)<br>*   Colonne   2,   lignes   49-69;<br>colonnes 3-6; figures 1-8 * | 1,2 | |
| A | FR-A-2 106 384  (GUTBROD)<br>* Revendications 1-3; figure 1 * | 1,2 | |
| A | FR-A-1 171 579  (LECOQ)<br>* Page 1; figures 1-3 * | 1,2 | DOMAINES TECHNIQUES RECHERCHES (Int. Cl.4)<br><br>A 01 F<br>A 01 B |

Le présent rapport de recherche a été établi pour toutes les revendications

| Lieu de la recherche | Date d'achèvement de la recherche | Examinateur |
|---|---|---|
| LA HAYE | 06-08-1987 | VERMANDER R.H. |